(19) Europäisches Patentamt
European Patent Office
Office européen des brevets

(11) Publication number: **0 151 051**
**B1**

(12) # EUROPEAN PATENT SPECIFICATION

(45) Date of publication of patent specification: **02.05.90**

(51) Int. Cl.$^5$: **B 32 B 27/08**

(21) Application number: **85300715.1**

(22) Date of filing: **01.02.85**

(54) **Laminate.**

(30) Priority: **01.02.84 JP 15020/84**
**05.06.84 JP 113852/84**

(43) Date of publication of application:
**07.08.85 Bulletin 85/32**

(45) Publication of the grant of the patent:
**02.05.90 Bulletin 90/18**

(84) Designated Contracting States:
**DE FR GB NL**

(56) References cited:
**GB-A-1 065 780**
**GB-A-2 071 007**
**US-A-4 101 702**

(73) Proprietor: **JAPAN SYNTHETIC RUBBER CO., LTD.**
**11-24, Tsukiji-2-chome Chuo-ku**
**Tokyo 104 (JP)**

(72) Inventor: **Tsutsumi, Tadahiko**
**5-22-8, Jike**
**Suzuka-shi (JP)**
Inventor: **Yamaguchi, Takashi**
**7-14, Mitakidai-2-chome**
**Yokkaichi-shi (JP)**
Inventor: **Kato, Tadashi**
**2017, Hachiojicho**
**Yokkaichi-shi (JP)**
Inventor: **Kitagawa, Yozo**
**14-46-302, Nishimichinobe**
**Kamagaya-shi (JP)**

(74) Representative: **Tubby, David George et al**
**MARKS & CLERK 57-60 Lincoln's Inn Fields**
**London WC2A 3LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 151 051 B1

## Description

This invention relates to a laminate consisting essentially of a thermoplastic resin and a vinylidene fluoride resin.

Among the thermoplastic resins, polycarbonate resins, polyacetal resins, polyphenylene ether resins, polyamide resins, polyurethane resins, polyester resins and the like are called "engineering plastics" and have excellent properties. Therefore, they are widely used in the production of industrial parts which are required to have a wide functionability, parts which require a high durability, and other various commercial products.

Aromatic alkenyl type thermoplastic resins and chlorine-containing thermoplastic resins are typical examples of other thermoplastic resins than the engineering plastics.

Among the chlorine-containing thermoplastic resins, polyvinyl chloride, chlorinated vinyl chloride resins, ethylene-vinyl chloride copolymer resins, chlorinated polyethylenes, vinyl chloride-vinyl acetate copolymers and the like are widely known. These resins have the common advantages that they are flame retardant, have relatively excellent weather resistance, are capable of giving mouldings having an attractive surface appearance and are of relatively low cost; therefore, they are widely utilized.

Of the aromatic alkenyl type thermoplastic resins, polystyrene resins, styrene-acrylonitrile copolymer resins, high-impact polystyrene resins, ABS resins, EPDM-styrene-acrylonitrile graft copolymers (AS resins) and the like are widely known. The common advantages of these resins are that they have excellent moulding flowability, the surface of a moulded article has an attractive appearance, they are relatively low in cost, and high impact polystyrene resins modified with a rubber, ABS resins, AES resins, etc. have excellent impact resistance, and, for these advantages, these resins are also widely used.

The common disadvantage of these resins is that, although they have excellent chemical resistance to certain specific types of chemicals and solvents, this resistance does not apply to a large variety of chemicals and chemical preparations. It is also well known that, during the long term outdoor use of products made of these resins, the product surface tends to crack, which can cause breakage and discolouration; such articles also tend to become soiled, and the soiled part is difficult to remove.

Thus, the scope of use of these thermoplastic resins has been limited despite their excellent properties.

The chemical resistance of these thermoplastic resins may be improved by adding a resin having excellent chemical resistance. This method is capable of providing a certain degree of improvement, but not sufficient. In addition, there is the risk of impairing the excellent properties of the thermoplastic resin. Weather resistance may be improved by adding an ultraviolet absorber or by blending large quantities of an inorganic pigment having excellent weather resistance. These methods are effective in the short term, but are unable to maintain the effect for a long period of time. Vinyl chloride resins, for instance, are often used as a sash material, especially in Europe and America, and are also used for troughs and roofing. However, as is well known, these articles made of a vinyl chloride resin suffer from deterioration with the lapse of time and are subject to discolouration, surface cracking and the other troubles mentioned above.

One method of making the surface difficult to contaminate is to add an antistatic agent. This method, again, shows some effect for a short time but cannot maintain the effect for a long time. Further, the addition of said additives can degrade the excellent characteristics of thermoplastic resins. Certain types of thermoplastic resins, such as polycarbonate resins are used for armrests and air-conditioning windows of railroad coaches or for sign-boards, but it is known that, in the former case, the article tends to suffer from surface cracking, yellowing, staining, etc., and, in the latter case, the article tends to crack due to deposition of gasoline, cleaner, etc.

The chemical resistance of aromatic vinyl type thermoplastic resins can be improved by copolymerizing a polar monomer (such as an acrylonitrile compound) or by increasing the amount of acrylonitrile compound copolymerized. This method, however, does not result in sufficient improvement in the chemical resistance. The method is also undesirable as it causes deterioration of mouldability and heat stability of the resin and consequently causes discolouration of moulded articles.

The disadvantages common to the aromatic vinyl type thermoplastic resins are that they are inflammable, that they are badly deteriorated by ultraviolet rays, that they are easily worn, that the surface of their products tends to be contaminated, and that they are vulnerable to chemicals. Because of these disadvantages, the scope of use of said resins is limited.

Various methods for overcoming these disadvantages have been proposed. For instance, flame retardancy can be improved by adding a flame-retardant. However, the addition of a flame-retardant can spoil the moulding flowability of the resin and the attractive appearance of articles moulded from the resin, and, in the case of an impact-resistant resin, its impact resistance will deteriorate greatly, resulting in a loss of the original advantages of styrene resins. Addition of a urethane resin has also been proposed in order to improve the wear resistance, but this involves the same problems as when adding a flame-retardant.

As seen above, it is difficult to eliminate all of the disadvantages common to thermoplastic resins at the same time.

On the other hand, vinylidene fluoride resins have excellent moulding flowability and also excellent weather resistance, chemical resistance, solvent resistance, wear resistance, heat resistance and flame retardancy, but these resins are expensive and this cost problem is a barrier to their wider use.

It would be ideal to obtain a resin which combines the advantages of both the thermoplastic resins and

the vinylidene fluoride resins. One method, which might seem obvious, of obtaining a moulded article possessing the advantages of the two types of resins would be to make a laminate of both resins. However, thermoplastic resins and vinylidene fluoride resins have poor adhesiveness to each other, so that, when the two resins are laminated, they tend to peel from each other; therefore, it has been practically impossible to adopt this method.

Specification GB—A—2071007 discloses a laminate which comprises a layer of polymethylmethacryalte, an acrylic rubber, and an acrylonitrile-butadiene-styrene copolymer and a layer of polyvinylidene fluoride. This laminate is complex, and the polymethylmethacrylate ester content calculates as a high figure, namely, about 74%.

We have now found that the adhesion between a vinylidene fluoride resin and a thermoplastic resin can be appreciably improved by incorporating a specific amount of units of an ester of an ethylenically unsaturated carboxylic acid into the thermoplastic resin layer.

According to the present invention, there is provided a laminate comprising a layer (A) of a thermoplastic resin adhering to a layer (B) of a vinylidene fluoride resin, characterised in that the layer (A) contains from 3 to 60% by weight, based on the weight of said layer (A), of polymerized units (C) of an ester of an ethylenically unsaturated carboxylic acid, and in that layers (A) and (B) adhere directly without interposition of an additional adhesive.

The polymerized units (C) of the ethylenically unsaturated carboxylic acid ester may exist either as a copolymer constituent of the resin (A) or in the form of a polymer (C′) of the ethylenically unsaturated ester incorporated into the layer of the resin (A).

Examples of thermoplastic resins which may be used in layer (A) of this invention include the highly functional plastics generally called engineering plastics, aromatic alkenyl type thermoplastic resins and chlorine-containing thermoplastic resins, at least one of these or a mixture of any two or more being used as the thermoplastic resin of layer (A).

Examples of engineering plastics include: polycarbonate resins, polyacetal resins, polyphenylene ether resins, polyamide resins, polyurethane resins and polyester resins, preferably polycarbonate resins, polyurethane resins and polyamide resins, and most preferably polycarbonate resins. A single one or any two or more of these may be used.

It is possible to use a composition consisting of two or more different types of said resins, but since there are cases where the uniform mixing of such resins is difficult, it is preferred to use a single resin to allow the resin to exhibit its innate properties to the fullest extent. Use of a polycarbonate resin is particularly preferred because laminates using this resin show excellent interlaminar adhesion and also cause little deterioration of the innate properties of the polycarbonate resin.

Polycarbonates suited for use in this invention may be a homopolycarbonate, a copolycarbonate or a mixture of different homopolycarbonates or different copolycarbonates.

The bound units in, for instance, an aromatic polycarbonate may comprise, as the base, for instance, the following bisphenols: hydroquinone, resorcinol, hydroxybiphenyl, bis(hydroxyphenyl)alkanes, bis(hydroxyphenyl)cycloalkanes, bis(hydroxyphenyl)ether, bis(hydroxyphenyl)sulphide, bis(hydroxyphenyl)ketone, bis(hydroxyphenyl)sulphoxide, bis(hydroxyphenyl)sulphone, and α,α-bis(hydroxyphenyl)diisopropylbenzene. Also, halogen-added bisphenols may be used. Among these bisphenols, the following are especially preferred: 2,2-bis(4-hydroxydiphenyl)propane, 2,4-bis(4-hydroxyphenyl)-2-methylbutane, 1,1-bis(4-hydroxyphenyl)cyclohexane, α,α-bis(4-hydroxyphenyl)-*p*-diisopropylbenzene, 2,2-bis(3,5-dichloro-4-hydroxyphenyl)propane, 2,2-bis)3,5-di-bromo-4-hydroxyphenyl)propane, and 2,2-bis(3-chloro-4-hydroxyphenyl)propane.

Polyacetal resins include homopolymers and copolymers. A homopolymer can be obtained, for instance, by subjecting formamide to anionic polymerization at a low temperature. Such a homopolymer is commercially available under the trade name Delrin. A copolymer can be obtained, for instance, by subjecting trioxane and ethylene oxide to cationic polymerization. Such a copolymer is commercially available under the trade name of Duracon.

Polyphenylene ether resins usable in this invention include homopolymers and copolymers obtained, for example, by subjecting a phenol compound represented by the general formula:

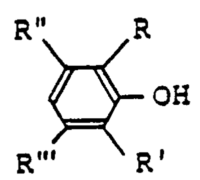

(wherein R and R′ are the same or different and each represents a hydrocarbon group having from 1 to 8 carbon atoms, and R″ and R‴ are the same or different and each represents a hydrocarbon group having from 1 to 8 carbon atoms or a hydrogen atom), mores specifically, 2,6-dimethylphenol or the like, to oxidative coupling polymerization. They may be homopolymers or copolymers. It is also possible to use a polyphenylene ether resin in admixture with a styrene resin or in the form of a modified polyphenylene ether resin obtained by grafting a styrene monomer thereon.

Polyamide resins include Nylon 6, Nylon 66, Nylon 610, Nylon 11, Nylon 12 and their copolymers.

Polyurethane resins are resinous polymers having a urethane bond (—O—C(:O)—N<), preferably those having a Rockwell hardness (ASTMD 785—62) R of 50 or above.

The polyester resin is preferably an aromatic polyester resin, and typical examples include polyesters obtained from aromatic dicarboxylic acids and dihydric alcohols such as polyethylene terephthalate, polypropylene terephthalate, polytetramethylene terephthalate, polypentamethylene terephthalate, polyhexamethylene terephthalate and the like, polytetramethylene terephthalate and polyethylene terephthalate being particularly preferred.

Chlorine-containing thermoplastic resins usable in this invention include vinyl chloride resins, chlorinated vinyl chloride resins, ethylene-vinyl chloride copolymers, chlorinated polyethylenes, vinyl chloride-vinyl acetate copolymers, vinylidene chloride resins, polychlorostyrenes, and copolymers of chlorostyrene and other copolymerizable vinyl monomers or rubber-like polymers. Among them, vinyl chloride resin, ethylene-vinyl chloride copolymer and vinyl chloride-vinyl acetate copolymer are preferred.

The aromatic alkenyl type thermoplastic resin for use as the resin of layer (A) in this invention may be a homopolymer of an aromatic alkenyl compound or a copolymer of an aromatic alkenyl compound and at least one other copolymerizable monomer. Examples of such copolymerizable monomers include ethylenically unsaturated carboxylic acid esters, alkenyl cyanide compounds and other ethylenically unsaturated compounds.

Aromatic alkenyl compounds include styrene, α-methylstyrene, vinyltoluenes (such as *p*-methylstyrene), halogen-nucleus-substituted styrenes and the like.

The aromatic alkenyl compound contributes to the moulding flowability of the aromatic alkenyl type thermoplastic resin. The content of the aromatic vinyl compound in the whole monomer is preferably 20% by weight or more. Good moulding flowability is difficult to obtain if the content of said compound is less than 20% by weight.

Examples of alkenyl cyanide compounds include acrylonitrile, methacrylonitrile and the like. When using such an alkenyl cyanide compound, its amount should be not more than 40% by weight, preferably from 5 to 40% by weight, and more preferably from 10 to 35% by weight, based on the weight of the whole monomer component of the thermoplastic resin (A). Use of this compound in an amount of more than 5% by weight can strengthen the adhesion to the vinylidene fluoride resin layer, but its use in excess of 40% by weight results in a deterioration of mouldability and heat stability of the thermoplastic resin (A), thus impairing the excellent innate properties of the thermoplastic resin and reducing the industrial value of the product.

Examples of ethylenically unsaturated esters of carboxylic acids include alkyl acrylates, alkyl methacrylates, and hydroxyalkyl esters of ethylenically unsaturated carboxylic acids. Examples of alkyl acrylates are methyl acrylate, ethyl acrylate and the like. The alkyl methacrylates include methyl methacrylate, ethyl methacrylate and the like. The hydroxyalkyl esters of ethylenically unsaturated carboxylic acids include β-hydroxyethyl acrylate, β-hydroxyethyl methacrylate and the like. Alkyl methacrylates are preferred, and methyl methacrylate is most preferred.

The ethylenically unsaturated carboxylic acid ester compound in the copolymer serves as the polymerized unit (C) which is one of the essential components of this invention. The content of polymerized units of the ethylenically unsaturated carboxylic acid ester compound should be from 3 to 60% by weight, based on the weight of the layer (A) of thermoplastic resin. Use of this ethylenically unsaturated ester compound in an amount of not less than 3% by wight can provide a laminate having improved adhesion between the aromatic vinyl type thermoplastic resin moulded article and the vinylidene fluoride resin laminated thereon.

The other copolymerizable monomer compounds may be an alkenyl compound having an amide group, an *N*-methylol compound or an ethylenically unsaturated carboxylic acid. Examples of alkenyl compounds having an amide group and of *N*-methylol compounds are acrylamide, methacrylamide, *N*-methylolacrylamide and the like. Examples of ethylenically unsaturated carboxylic acids are acrylic acid, methacrylic acid, fumaric acid, maleic acid, itaconic acid and the like.

The copolymerizable monomer compounds can be used either singly or in admixture of two or more. Polyfunctional monomers such as divinylbenzene can also be used as the copolymerizable monomer.

The method of preparing the aromatic alkenyl type thermoplastic resin used in this invention is not critical, but such methods as emulsion polymerization, suspension polymerization, bulk suspension polymerization, bulk polymerization and solution polymerization can be used.

The aromatic alkenyl type thermoplastic resin ised in this invention can have its impact strength much improved by incorporating into it a rubber-like polymer, for example a diene rubber-like polymer or a non-diene rubber-like polymer. Examples of diene rubber-like polymers are polybutadiene, SBR, NBR, polyisoprene, polychloroprene and the like, and these polymers can be prepared by emulsion polymerization, solution polymerization or the like. They also include tin-, silicon- or lithium-coupled polybutadiene, polyisoprene, SBR, styrene-butadiene block copolymers and the like. These rubber-like polymers can be used either alone or in admixture of two or more. Examples of non-diene rubber-like polymers include ethylene-propylene copolymer, ethylene-propylene-non-conjugated diene copolymer, chlorinated polyethylene, isobutylene-isoprene rubber, acrylic rubber-like polymers, such as butyl acrylate polymer, copolymers of butyl acrylate and acrylonitrile, copolymers of butyl acrylate and butadiene,

copolymers of butyl acrylate, butadiene and acrylonitrile, and the like. These non-diene rubber-like polymers can be used either alone or in admixture of two or more. It is also possible to use a mixture of a diene rubber-like polymer and a non-diene rubber-like polymer.

The content of the rubber-like polymer in the aromatic alkenyl type thermoplastic resin is preferably not more than 40% by weight. If it exceeds 40% by weight, the resulting composition lacks rigidity and is unsuited for application in fields where the performance of aromatic alkenyl type thermoplastic resin *per se* is required. In view of the balance between impact resistance and rigidity, the preferred range of said rubber-like polymer content is from 5 to 40% by weight.

The ethylenically unsaturated carboxylic acid ester polymer (C') which may be incorporated into the layer of the thermoplastic resin (A) in this invention is an acrylic resin obtained by polymerizing an ethylenically unsaturated carboxylic acid ester monomer or a mixture of such monomer and other copolymerizable monomer or monomers.

Examples of the ester compounds include alkyl acrylates, alkyl methacrylates, and hydroxyalkyl esters of ethylenically unsaturated carboxylic acids. Examples of the alkyl acrylates are methyl acrylate, ethyl acrylate and the like. Examples of the alkyl methacrylates are methyl methacrylate, ethyl methacrylate and the like. Examples of the hydroxyalkyl esters of ethylenically unsaturated carboxylic acids include β-hydroxyethyl acrylate, β-hydroxyethyl methacrylate and the like. Alkyl methacrylates are preferred, and methyl methacrylate is more preferred.

In this invention, the thermoplastic resin layer (A) containing the polymerized units (C) of an ethylenically unsaturated ester may be prepared by the following methods:

(1) copolymerizing an ethylenically unsaturated carboxylic acid ester with the monomeric constituent of the thermoplastic resin (A).

(2) blending a (co)polymer (C') of an ethylenically unsaturated carboxylic acid ester separately prepared with the thermoplastic resin (A).

The copolymerization in (1) above may be carried out by producing the thermoplastic resin of layer (A) in the presence of an ethylenically unsaturated carboxylic acid ester. In particular, this is useful in the preparation of chlorine-containing thermoplastic resins, aromatic alkenyl type thermoplastic resins and the like for use as the thermoplastic resin of layer (A).

Preferred examples of aromatic alkenyl type thermoplastic resins for use in this invention are styrene-methyl acrylate copolymer, styrene-methyl methacrylate-acrylonitrile copolymer, diene rubber-styrene-methyl methacrylate copolymer, diene rubber-styrene-methyl methacrylate-acrylonitrile graft copolymer, non-diene rubber-styrene-methyl methacrylate graft copolymer and non-diene rubber-styrene-methyl methacrylate-acrylonitrile graft copolymer, which may be used alone or in admixture of two or more, and at least one of which may also be used in admixture with one or more other resins such as styrene-acrylonitrile copolymer, ABS resin and the like.

When the (co)polymer (C') is to be blended with the thermoplastic resin of layer (A), the (co)polymer (C') may be a homopolymer of an ethylenically unsaturated carboxylic acid ester or a copolymer of an ethylenically unsaturated carboxylic acid ester with another copolymerizable alkenyl monomer and/or rubber-like polymer. A blend of said homopolymer and said copolymer may also be used.

Monomers copolymerizable with the ethylenically unsaturated esters include aromatic alkenyl compounds, alkenyl cyanide compounds, compounds having amide groups, polyfunctional compounds and the like. Preferred examples are styrene, α-methylstyrene and acrylonitrile.

The ethylenically unsaturated ester polymer (C') may be rubber-modified. Use of a rubber-modified acrylic resin can provide a laminate with even better impact resistance. Rubber-like polymers usable for said rubber-modified ethylenically unsaturated ester polymer include diene rubber-like polymers and non-diene rubber-like polymers. It is possible to use one or more of the rubber-like polymers used in said aromatic alkenyl type thermoplastic resin. Preferred examples of said rubber-like polymers are polybutadiene, SBR, EPDM, acrylic rubber and the like. EPDM and acrylic rubber are preferred for applications where weather resistance is required.

Preferred examples of the ethylenically unsaturated carboxylic acid ester (co)polymer (C') are polymethyl methacrylate and styrene-methyl methacrylate copolymer, styrene-acrylonitrile-methyl methacrylate copolymer, butadiene-styrene-methyl methacrylate graft copolymer, butadiene-styrene-acrylonitrile-methyl methacrylate graft copolymer and the like.

If the ethylenically unsaturated ester polymer (C') is a copolymer, that is, a copolymer of an ethylenically unsaturated carboxylic acid ester and another copolymerizable monomer and/or rubber-like polymer, the amount of the ethylenically unsaturated carboxylic acid ester contained in said polymer is preferably at least 50% by weight, still more preferably at least 60% by weight, and most preferably at least 70% by weight. However, homopolymers are most preferred.

The content of the rubber-like polymer in the ethylenically unsaturated ester (co)polymer (C') should be not more than 70% by weight. If it exceeds 70% by weight, the content of the ethylenically unsaturated carboxylic acid ester compound in said (co)polymer (C') becomes too small, and, if the thermoplastic resin (A) contains little or no polymerized units (C) of ethylenically unsaturated esters, insufficient adhesion is provided between the resin (A) and the vinylidene fluoride resin (B) and there cannot be obtained a laminate which can withstand practical use. The (co)polymer (C') need not contain any rubber-like polymer, but, if no rubber-like polymer is present in the thermoplastic resin (A), it is preferred that the (co)polymer

(C') should contain a rubber-like polymer to achieve a good balance between impact resistance and adhesive force. The rubber-like polymer content is preferably in the range of from 5 to 40% by weight, more preferably from 10 to 30% by weight. Where the copolymer (C') is incorporated into the thermoplastic resin (A), the polymerized units of the ethylenically unsaturated ester must be present in an amount of from 3 to 60% by weight of the weight of the layer of the thermoplastic resin (A).

The flow value of the (co)polymer (C') as measured by a Koka type flow tester is preferably from 0.5 to 40 ($\times 10^{-3}$ $cm^3$/sec. 200°C, 30 kg/$cm^2$, nozzle: 1 mm diameter $\times$ 2 mm). This range of flow values of the (co)polymer (C') provides a good compatibility of the (co)polymer (C') with the vinylidene fluoride resin (B), making it possible to obtain a laminate having excellent mechanical strength.

The method of preparing the (co)polymer (C') is not critical, but such methods as emulsion polymerization, suspension polymerization, bulk suspension polymerization, bulk polymerization and solution polymerization are preferably used.

Blending of the ethylenically unsaturated ester (co)polymer (C') with the thermoplastic resin of layer (A) is suitable for all the thermoplastic resins (A), but is particularly preferred where the thermoplastic resin (A) cannot easily form a copolymer with the ethylenically unsaturated carboxylic acid ester, for example, engineering plastics.

The thermoplastic resin (A) may be blended uniformly with the (co)polymer (C'), for example, by mixing in a Henschel mixer and hot-kneading the resulting mixture by means of an extruder, a Banbury mixer or on a roll.

The content of the polymerized units (C) of the ethylenically unsaturated carboxylic acid ester in the layer (A) of the thermoplastic resin is from 3 to 60% by weight, based on the weight of the layer (A) of the resin. Provided that this content is not less than 3% by weight, the resulting laminate has improved adhesion between the thermoplastic resin layer and the vinylidene fluoride resin layer laminated thereon.

An improved method comprises adding a flowability-improver or lowering the molecular weight of the thermoplastic resin (A), but in the former case, a reduction of adhesion to the vinylidene fluoride resin results, while, in the latter case, the heat stability at the time of working is reduced and partial decomposition of the resin results, generating a gas, which impairs the appearance of the moulded article by forming silver streaks or discolouring the moulded article surface.

The content of polymerized units (C) in the thermoplastic resin (A) is the total sum of (1) the units of ethylenically unsaturated carboxylic acid ester copolymerized with the thermoplastic resin (A) and (2) the units of ethylenically unsaturated carboxylic acid ester in a homopolymer or copolymer (C') of an ethylenically unsaturated carboxylic acid ester separately prepared and blended with the thermoplastic resin (A).

Vinylidene fluoride resins usable in this invention include not only homopolymers of vinylidene fluoride but also copolymers preferably having 50% or more of vinylidene fluoride, more preferably copolymers of 70% or more of vinylidene fluoride. A blend polymer of a homopolymer or copolymer of vinylidene fluoride with a (co)polymer of an ethylenically unsaturated carboxylic acid ester (C'), such as a polymethacrylate, in such an amount that the vinylidene fluoride content is 60% by weight or more preferably at least 70% by weight, more preferably at least 75% by weight, may be employed.

Examples of monomers which can be copolymerized with vinylidene fluoride are aromatic alkenyl compounds, esters of ethylenically unsaturated carboxylic acids, alkenyl cyanide compounds and the like, of which the ethylenically unsaturated carboxylic acid esters mentioned in relation to component (C') above are particularly preferred.

When the vinylidene fluoride resin (B) contains polymerized units (C) of an ethylenically unsaturated carboxylic acid ester, the adhesiveness between the layer of the resin (A) and the layer of the resin (B) can be still further improved. The content of units (C) in the resin (B) is preferably not more than 40% by weight, more preferably not more than 30% by weight, but, to achieve improved adhesiveness, at least 2% by weight is preferred and at least 5% by weight is more preferred.

The method of laminating the layer of thermoplastic resin (A) and the layer of vinylidene fluoride resin (B) is not critical, but the following methods can be favorably used:

(1) Each of (A) and (B) is first subjected to an extruder or other moulding means such as hot rolls, to form a moulded article (including sheets, films, etc.) and the moulded articles of (A) and (B) are put together while not perfectly solidified and press-bonded to obtain a laminate.

(2) Each of (A) and (B) is moulded into a sheet or film by an extruder or a hot roll, and the sheets or films of (A) and (B) are put together and press-bonded with heating.

(3) Pellets or powder of (A) or (B) are put on a sheet of (B) or (A), respectively, and the resulting assembly is compression-moulded.

(4) (B) is dissolved in a suitable solvent (such as dimethylformamide), and the resulting solution is applied to a moulded article of (A) and the solvent is evaporated off to obtain a laminate, or (A) is dissolved in a suitable solvent, and then the resulting solution is applied on a sheet or other article of (B) and the solvent is evaporated off to obtain a laminate.

When laminating (B) on a moulded article of (A), the vinylidene fluoride resin (B) can be laminated on at least one side of the moulded article of (A), and the side to be laminated can be decided according to the performance requirements in practical use. Also, in the laminate of this invention, a layer of the same thermoplastic resin as (A), but free from the polymerized units (C), may be laminated on that side of the

layer (A) to which the layer (B) is not bonded. To the side of the layer of (B) to which the layer of (A) is not bonded may be further laminated another layer of (B). For example, by laminating a transparent layer of a vinylidene fluoride resin (B) to the pigmented resin (B) layer laminated to the layer of the resin (A), not only is the effect of this invention obtained, but a sharp colour and an excellent light resistance are also obtained.

The thickness of the laminate is not critical, and the laminate can be obtained in any thickness suited for its intended use. The thermoplastic resin (A) used in the laminate of this invention may be reinforced with glass fibre, metal fibre, carbon fibre, an organic filler or an inorganic filler such as calcium carbonate. Also, the layer of the thermoplastic resin (A) may be foamed.

A colouring material having a high hiding power against light such as titanium dioxide, carbon black, etc., may be present in the layer of the vinylidene fluoride resin (B) to minimize the deterioration of weather resistance of the laminate.

The laminate of this invention finds a wide variety of uses. Typical examples of its uses include signboards, material for suitcases, etc., in which use the property of the vinylidene fluoride resin layer to keep off soil proves beneficial, and various types of sashes, troughs, light-weight roofing, various kinds of signs such as road signs, billboards, etc., in which use the excellent weather resistance of the laminate proves advantageous. Also, by taking advantage of the strong resistance of the vinylidene fluoride resin layer to various kinds of chemicals the laminate can be used for storage containers for various chemicals.

In the production of the laminate of this invention, if necessary, a suitable additive or additives such as colouring matter, heat stabilizers, lubricants, plasticizers, ultraviolet absorbers, antistatic agents, flame-restardents, etc. may be added in both or either of the thermoplastic resin (A) and the vinylidene fluoride resin (B).

The invention is further described with reference to the following Examples, in which all parts and percentages are by weight unless otherwise specified.

## Examples 1—9 and Comparative Examples 1—4

I. Preparation of moulded articles (A-1 to A-13) of thermoplastic resins (A)

(1) Compounding recipe

Shown in Table 1.

(2) Moulding method

The respective blends shown in Table 1 were melted and kneaded using a 6 inch (15 cm) diameter roll kneader at 190°C, and press-moulded at 210°C by a press-moulder to form square plates A-1- to A-13 having a size of 150 mm × 150 mm × 1 mm (thickness).

II. Preparation of moulded articles (B-1 to B-3) of vinylidene fluoride resins (B)

(1) Type

B-1: polyvinylidene fluoride [natural pellets of KYNAR 740 (made by Pennwalt)]

B-2: polyvinylidene fluoride/polymethyl methacrylate=80/20 (%)

B-3: polyvinylidene fluoride/ABMS = 60/40 (%) (resin of Note 3 under Table 1).

(2) Moulding method

The above resins (B-1, B-2 and B-3) were melted and kneaded using a 6 inch (15 cm) diameter roll kneader at 190°C and press-moulded at 210°C to form square plates B-1, B-2 and B-3 having a size of 150 mm × 150 mm × 1 mm (thickness).

III. Method of laminating moulded articles of thermoplastic resins (A) and moulded articles of vinylidene fluoride resins (B) and laminate-evaluation method.

Using the moulded articles (square plates A-1 to A-13) of the thermoplastic resins (A) and the moulded articles (square paltes B-1 to B-3) of the vinylidene fluoride resins (B), laminates were made in the combinations shown in Table 2 in the following way and these laminates were evaluated in the manner also shown below.

A plate of polyvinylidene fluoride resin (B) and a plate of the thermoplastic resin (A) were put together and press-moulded at 210°C by a press-moulder to form an approximately 1.8 mm thick laminate.

(1) Determination of strength of adhesion

A 10 mm wide and 40 mm long test piece was cut out of each laminate and the strength of adhesion at the interface of the laminate was measured. The laminate layers were forcibly peeled along their interface to a length of about 5 mm from one end of the test piece in its longitudinal direction with a knife having a sharp edge.

The respective peeled layers were gripped with a suitable jig and pulled in opposite directions vertically and the degree of adhesion at the interface was measured using an Autograph IS-2000 (a registered trade mark for a tensile tester of Shimadzu Corporation).

(2) Heat shrinkage temperature

A 12.7 mm wide and 127 mm long test piece was cut from the laminate. This test piece was left as it was heated in an air over for one hour and, after conditioning it at room temperature for 24 hours, the shrinkage along the longer side (127 mm) of the test piece was measured. The heating temperature was raised in increments of 5°C.

Table 1: Compounding recipe molded Article of thermoplastic resin (A)

| Component \ Molded article No. | Reference recipe A-1 | A-2 | A-3 | A-4 | A-5 | A-6 |
|---|---|---|---|---|---|---|
| Polycarbonate resin 1) | 30 | 40 | 50 | 60 | 70 | 100 |
| Polymethyl methacrylate 2) | 70 | | 50 | 25 | 30 | |
| ABMS resin 3) | | 60 | | | | |
| ABS resin 4) | | | | 15 | | |
| Methyl methacrylate content in said resin (%) | 70 | 35.4 | 50 | 25 | 30 | 0 |

Note: 1) 7022-A made by Mitsubishi Chemical Industries, Limited.

2) GF-1000 made by Kyowa Gas Chemicals

3) Methyl methacrylate/styrene/acrylonitrile/polybutadiene = 59/18/5/18(%) graft polymer

4) styrene/acrylonitrile/polybutadiene = 58/22/20(%) ABS resin

Table 2: Results of evaluation of laminates

| | Reference Example 1 | Example 2 | Example 3 | Example 4 | Example 5 | Comp. Example 1 |
|---|---|---|---|---|---|---|
| (Combination of resin layers in laminate) Thermoplastic resin (A) layer | A-1 | A-2 | A-3 | A-4 | A-5 | A-6 |
| Polyvinylidene fluoride resin (B) layer | B-2 | B-1 | B-2 | B-3 | B-2 | B-1 |
| Methyl methacrylate content in thermoplastic resin (A) (%) | 70 | 35.4 | 50 | 25 | 30 | 0 |
| Methyl methacrylate content in polyvinylidene fluoride resin (B) (%) | 20 | 0 | 20 | 40 | 20 | 0 |
| Strength of adhesion (kg/cm) | Not peeled (above 5 kg/cm) | Same as left | Same as left | Same as left | 4.0 | Not bonded |
| Heat shrinkage temperature (°C) | 100 | 100 | 105 | 110 | 115 | 125 |

Table 3: Compounding recipe of molded article of thermoplastic resin (A)

| Component \ Molded article No. | A-7 | A-8 | A-9 | A-10 | A-11 | A-12 | A-13 |
|---|---|---|---|---|---|---|---|
| Polyurethane resin[1)] | 50 | 100 | | | | | |
| Polyamide resin[2)] | | | 40 | 100 | | | |
| Polyethylene terephthalate[3)] | | | | | 50 | 100 | |
| Polybutylene terephthalate[4)] | | | | | | | 50 |
| ABMS resin[5)] | 50 | | 50 | | 50 | | 50 |
| ABS resin[6)] | | | 10 | | | | |
| Methyl methacrylate content in said resin (%) | 29.5 | 0 | 29.5 | 0 | 29.5 | 0 | 29.5 |

Note: 1) ELASTOLLAN E-574 FNAT made by Nippon Elastollan

2) AMILAN CM-1017 made by Toray

3) PET made by Teijin

4) PBT 5010 made by Mitsubishi Kasei Kogyo

5) resin of Note 3) in Table 1

6) resin of Note 4) in Table 1

Table 4: Results of evaluation of laminates

| | Example 6 | Comp. Example 2 | Example 7 | Comp. Example 3 | Example 8 | Comp. Example 4 | Example 9 |
|---|---|---|---|---|---|---|---|
| [Combination of resin layers in laminate] Thermoplastic resin (A) layer | A-7 | A-8 | A-9 | A-10 | A-11 | A-12 | A-13 |
| Polyvinylidene fluoride resin (B) layer | B-2 | B-2 | B-2 | B-2 | B-2 | B-2 | B-2 |
| Methyl methacrylate polymer content in thermoplastic resin (A) (%) | 29.5 | 0 | 29.5 | 0 | 29.5 | 0 | 29.5 |
| Methyl methacrylate polymer content in polyvinylidene fluoride resin (B) (%) | 20 | 20 | 20 | 20 | 20 | 20 | 20 |
| Strength of adhesion (kg/cm) | Not peeled (above 5 kg/cm) | Not bonded | 4.0 | Not bonded | Not peeled | Not peeled | 3.5 |

(1) Examples 10—14 and Comparative Examples 5—7

I. Preparation of moulded articles (A014 to A-20) of thermoplastic resins (A)

(1) Compounding recipe

Shown in table 5

(2) Moulding method

The respective blends shown in Table 5 were melted and kneaded at 180°C using a 6 inch (15 cm) diameter roll kneader and press-moulded by a press-moulder at 180°C to form square plates A-14—A-20 having a size of 15 cm × 15 cm × 1 mm (thickness).

II. Preparation of moulded articles (B-1 to B-3) of vinylidene fluoride resins (B)

(1) Type

As in Example 1 (B-1 to B-3).

(2) Moulding method

The above resins (B-1, B-2 and B-3) were respectively melted and kneaded at 180°C using a 6 inch (15 cm) diameter roll kneader and press-moulded at 200°C by a press-moulder to form square flat plates B-1, B-2 and B-3 having a size of 15 cm × 15 cm × 1 mm (thickness).

III. Method of laminating moulded articles of thermoplastic resins (A) and moulded articles of vinylidene fluoride resins (B) and evaluation of adhesion.

Lamination of the thermoplastic resin (A) plates A-14 to A-20 and the vinylidene fluoride resin (B) plates B-1 to B-3 and the evaluation of the degree of adhesion of each laminate were conducted in the following manner:

The plates of polyvinylidene fluoride resin (B) and the plate of thermoplastic resin (A) were put together and press-moulded at 180°C using a press-moulder to form an approximately 1.8 mm thick laminate. A 1 mm wide and 4 cm long test piece was cut out of each laminate and subjected to the same adhesion test as in Example 1.

Table 5: Compounding recipe of molded articles of thermoplastic resins (A)

| Component \ Molded article No. | A-14 | A-15 | A-16 | A-17 | A-18 | A-19 |
|---|---|---|---|---|---|---|
| Vinyl chloride resin (D.P. 1500) (parts) | 50 | 80 | 90 | | 60 | 100 |
| Vinyl chloride-vinyl acetate copolymer (D.P. 1500, vinyl acetate content 15%) (parts) | | | | 70 | | |
| Polymethyl methacrylate[1)] (parts) | 50 | | | | 25 | |
| Methyl methacrylate-styrene copolymer[2)] (parts) | | | | 30 | | |
| ABMS resin[3)] (parts) | | 20 | 10 | | | |
| ABS resin[4)] (parts) | | | | | 15 | |
| Tribasic lead sulfate (parts) | 1.5 | 1.5 | 1.5 | 1.5 | 1.5 | 1.5 |
| Dibasic lead stearate (parts) | 1.0 | 1.0 | 1.0 | 1.0 | 1.0 | 1.0 |
| Calcium stearate (parts) | 0.5 | 0.5 | 0.5 | 0.5 | 0.5 | 0.5 |
| Methyl methacrylate polymer content in said resin (%) | 50 | 11.8 | 5.9 | 16.5 | 25 | 0 |

Note: 1) GF-100 made by Kyowa Gas Chemicals
2) methyl methacrylate/styrene = 55/45% copolymer
3) methyl methacrylate/styrene/acrylonitrile/polybutadiene = 59/18/5/18(%) graft copolymer
4) styrene/acrylonitrile/polybutadiene = 58/22/20(%) ABS resin.

Also, a 12.7 mm wide and 127 mm long test piece was cut out of each laminate and subjected to a flammability test according to the Flammability Test Method Subject-94 defined by UL Laboratory. Flammabilities of the respective layers of each laminate and degree of adhesion between the layers are shown in Table 6.

As shown in the test results, Examples 10 to 14 gave laminates with an excellent strength of adhesion between the layers.

Comparative Example 5 concerns a laminate obtained using a thermoplastic resin (A) containing no ethylenically unsaturated carboxylic acid ester polymer. The laminate layers were not bonded to each other.

Comparative Example 6 concerns a laminate formed using a thermoplastic resin (A) containing methyl methacrylate polymer in an amount of 70% which exceeds the specified range of this invention. This laminate showed a degree of adhesion comparable with the laminates of the Examples of this invention, but the flammability test showed that this laminate was easier to burn and thus lower in flame retardancy than the laminates of the Examples of this invention.

Comparative Example 7 concerns a laminate made using polyvinylidene fluoride B-2 in Comparative Example 1. This laminate showed a slightly better degree of adhesion than the laminate of Comparative Example 4 but was still unsatisfactory in adhesion.

Table 6: Results of evaluation of laminate

| | Example 10 | Example 11 |
|---|---|---|
| Combination of resin layers in laminate: Thermoplastic resin (A) layer | A-14 | A-15 |
| Polyvinylidene fluoride resin (B) layer | B-1 | B-2 |
| Methyl methacrylate polymer content in thermoplastic resin (A) (%) | 50 | 11.8 |
| Methyl methacrylate polymer content in polyvinylidene fluoride resin (B) (%) | 0 | 20 |
| Strength of adhesion (kg/cm) | Not peeled (over 5 kg/cm) | Same as left |
| Flammability (UL-94) | V-0 | V-0 |

- cont'd -

Table 6 (cont'd)

| Example 12 | Example 13 | Example 14 | Comp. Example 5 | Comp. Example 6 | Comp Example 7 |
|---|---|---|---|---|---|
| A-16 | A-17 | A-18 | A-19 | A-20 | A-19 |
| B-2 | B-2 | B-2 | B-1 | B-3 | B-2 |
| 5.9 | 16.5 | 25 | 0 | 85 | 0 |
| 20 | 20 | 20 | 0 | 40 | 20 |
| Same as left | Same as left | Same as left | Not bonded | Not peeled (over 5 kg/cm) | 1.2 |
| V-0 | V-0 | V-0 | V-0 | Burning | V-0 |

Example 15

A styrene type thermoplastic resin (A) was prepared in the following way.

50% by weight of natural pellets of an ABS resin (styrene/acrylonitrile/polybutadiene = 57/18/25 by weight) obtained by emulsion polymerization and 50% by weight of natural pellets of methyl methacrylate homopolymer (Parapet GF-1000 made by Kyowa Gas Chemicals) were melted and kneaded at 180°C using a 6 inch (15 cm) diameter roll kneader to form a styrene type thermoplastic resin A-21. This A-21 resin was press-moulded at 200°C by a press-moulder to form a square plate having a size of 5 cm × 5 cm 1 mm (thickness).

Meanwhile, natural pellets of a polyvinylidene fluoride resin (B) (KYNAR 740 made by Pennwalt) were press-moulded at 200°C by a press-moulder to form a square plate having a size of 5 cm × 5 cm × 1 mm (thickness). This polyvinylidene fluoride resin plate and the previously obtained styrene type thermoplastic resin plate were put together and press-moulded at 200°C by a press-moulder to obtain an approximately 1.8 mm thick laminate. A 1 mm wide and 4 cm long test piece was cut from this laminate and subjected to the same adhesion test as in Example 1. The results are shown in Table 7.

Example 16

30% by weight of natural pellets of a styrene/acrylonitrile/methyl methacrylate/polybutadiene (18/5/59/18 by weight) copolymer resin obtained by emulsion polymerization and 70% by weight of natural pellets of an ABS resin (styrene/acrylonitrile/polybutadiene = 57/18/25 by weight) also obtained by emulsion polymerization were melted and kneaded at 180°C using a 6 inch (15 cm) diameter roll kneader to form a styrene type thermoplastic resin A-22, and, using this A-22 resin, a laminate was made and its interface adhesion was measured and evaluated by the same procedure as in Example 15. The results are shown in Table 7.

Example 17

The procedure described in Example 16 was repeated, except that the styrene type thermoplastic resin (A) was replaced by a stryene-acrylonitrile-methyl methacrylatepolybutadiene copolymer resin, the weight ratio of the copolymer resin to the ABS resin was changed to 10:90, the styrene type thermoplastic resin was named A-23, and the polyvinylidene fluoride resin (B) was replaced by a mixture of polyvinylidene fluoride (KYNAR 740) and polymethyl methacrylate in a ratio of 90:10 by weight, to evaluate the degree of adhesion between the layers. The results are shown in Table 7.

Comparative Example 8

The procedure described in Example 15 was repeated, except that an ABS resin alone was substituted for the resin A-21, and the styrene type thermoplastic resin was named A-24, to evaluate the degree of adhesion between the layers. The results ae shown in Table 7.

Comparative Example 9

The procedure described in Example 15 was repeated, except that the thermoplastic resin A-21 was replaced by a mixture of the stryrene-acrylonitrile-methyl methacrylate-polybutadiene copolymer resin of Example 16 and the ABS resin of Example 15 in a ratio of 2:98 by weight, which was named A-25, to evaluate the degree of adhesion between the layers. The results are shown in Table 7.

The thermoplastic resin of Comparative Example 9 contained methyl methacrylate units in an amount of 1.6% which is lower than the specified range of this invention, and this resin had poor adhesion to the polyvinylidene fluoride sheet.

Examples 18 and 19

Graft polymers (MBS resin and MABS resin) of the following compositions were prepared by emulsion polymerisation and subjected to an adhesion test to KYNAR-740 according to the method of Example 15. The physical properties of the individual resins were also evaluated. The results are shown in Table 7.

MBS resin (A-26): polybutadiene/styrene/methyl methacrylate = 24/56/20 by weight

MABS resin (A-27): polybutadiene/styrene/methyl methylacrylate/acrylonitrile = 24/36/25/15 by weight.

Table 7

| | Examples | | | | | Comp. Examples | |
|---|---|---|---|---|---|---|---|
| | 15 | 16 | 17 | 18 | 19 | 8 | 9 |
| Thermoplastic resin | A-21 | A-22 | A-23 | A-26 | A-27 | A-24 | A-25 |
| Polybutadiene (%) | 12.5 | 23.6 | 24.3 | 24 | 24 | 25 | 24.9 |
| Styrene | 28.5 | 49.2 | 53.1 | 56 | 36 | 57 | 56.2 |
| Methyl methacrylate | 50.0 | 11.8 | 5.9 | 20 | 25 | 0 | 1.2 |
| Acrylonitrile | 9.0 | 15.4 | 16.7 | - | 15 | 18 | 17.7 |
| Methyl methacrylate content (%) | 50 | 11.8 | 5.9 | 20 | 25 | 0 | 1.2 |
| Polyvinylidene fluoride content (%) | 100 | 100 | 90 | 100 | 100 | 100 | 100 |
| Properties of thermoplastic resin per se | | | | | | | |
| Molding flowability ($x10^{-3}$ $cm^3$/sec) | 23 | 14 | 1.5 | 17 | 15 | 18 | 16 |
| Izod impact strength (kg-cm/cm) | 18 | 38 | 36 | 35 | 33 | 41 | 38 |
| Strength of adhesion | 2.5 kg/cm | Not peeled | Same as left | Same as left | Same as left | Not bonded | Same as left |

**Claims**

1. A laminate comprising a layer (A) of a thermoplastic resin adhering to a layer (B) of a vinylidene fluoride resin characterised in that the layer (A) contains from 3 to 60% by weight, based on the weight of the layer (A), of polymerized units (C) of an ester of an ethylenically unsaturated carboxylic acid, and in that layers (A) and (B) adhere directly without interposition of an additional adhesive.

2. A laminate according to Claim 1, wherein the thermoplastic resin (A) is at least one of: engineering plastics, chlorine-containing thermoplastic resins and aromatic alkenyl type thermoplastic resins.

3. A laminate according to Claim 2, wherein the engineering plastic is at least one of: polycarbonate resins, polyacetal resins, polyphenylene ether resins, polyamide resins, polyurethane resins and polyester resins.

4. A laminate according to Claim 2, wherein the chlorine-containing thermoplastic resin is a homopolymer or copolymer of vinyl chloride.

5. A laminate according to Claim 2, wherein the chlorine-containing thermoplastic resin is at least one of: polyvinyl chloride, vinyl chloride-ethylene copolymer and vinyl chloride-vinyl acetate copolymer.

6. A laminate according to Claim 2, wherein the aromatic alkenyl type thermoplastic resin is a homopolymer of an aromatic alkenyl compound or a compolymer of an aromatic alkenyl compound and at least one compound selected from ethylenically unsaturated carboxylic acid esters, ethylenically unsaturated carboxylic acids and the alkenyl cyanide compounds.

7. A laminate according to Claim 2, wherein the aromatic alkenyl type thermoplastic resin contains a rubber-like polymer.

8. A laminate according to Claim 7, wherein the rubber-like polymer is at least one conjugated diene rubber and/or olefinic rubber.

9. A laminate according to any of the preceding Claims, wherein the vinylidene fluoride resin (B) is polyvinylidene fluoride or a copolymer containing 50% or more of vinylidene fluoride.

10. A laminate according to any of the preceding Claims, wherein the ethylenically unsaturated carboxylic acid ester is an alkyl acrylate, alkyl methacrylate or hydroxyalkyl ester of an ethylenically unsaturated carboxylic acids or a combination of any two or more thereof.

11. A laminate according to Claim 10, wherein the ethylenically unsaturated carboxylic acid ester is an alkyl methacrylate.

12. A laminate according to Claim 11, wherein the ethylenically unsaturated carboxylic acid ester is methyl methacrylate.

13. A laminate according to any of the preceding Claims, wherein the layer of the vinylidene fluoride resin (B) contains from 2 to 40% by weight of polymerized units of an ethylenically unsaturated carboxylic acid ester.

14. A laminate according to any of the preceding Claims, wherein an ethylenically unsaturated carboxylic acid ester polymer (C') is contained in the layer of the thermoplastic resin (A).

15. A laminate according to Claim 13, wherein an ethylenically unsaturated carobyxlic acid ester polymer (C') is contained in the layer of the vinylidene fluoride resin (B).

16. A laminate according to Claim 14 or Claim 15, wherein the ethylenically unsaturated carboxylic acid ester polymer (C') is a homopolymer of an ethylenically unsaturated carboxylic acid ester; a copolymer of an ethylenically unsaturated carboxylic acid ester and at least one other copolymerizable vinyl monomer and/or at least one rubber-like polymer; or a blend of said homopolymer and said copolymer.

17. A laminate according Claim 16, wherein the ethylenically unsaturated carboxylic acid ester polymer (C') is polymethyl methacrylate.

**Patentansprüche**

1. Laminat mit einer Schicht (A) aus einem thermoplastischen Kunstharz, die an einer Schicht (B) aus einem Vinylidenfluoridharz haftet, dadurch gekennzeichnet, daß die Schict (A) von 3 bis 60 Gewichtsprozent, bezogen auf die Schicht (A), polymerisierter Estereinheiten (C) einer ethylenisch-ungesättigten Carbonsäure enthält und die Schichten (A) und (B) direkt ohne Zwischenlage eines zusätzlichen Klebstoffs aneinander haften.

2. Laminat nach Anspruch 1, dadurch gekennzeichnet, daß das thermoplastische Harz (A) mindestens ein technisches Kunstharz, ein thermoplastisches, Chlor enthaltendes Kunstharz oder ein thermoplastisches aromatisches Alkenylharz ist.

3. Laminat nach Anspruch 2, dadurch gekennzeichnet, daß das technische Kunstharz mindestens ein Polycarbonat, Polyacetal, Polyphenylenether, Polyamid, Polyurethan oder Polyester ist.

4. Laminat nach Anspruch 2, dadurch gekennzeichnet, daß das thermoplastische, Chlor enthaltende Kunstharz ein Vinylchlorid-Homopolymer oder -Copolymer ist.

5. Laminat nach Anspruch 2, dadurch gekennzeichnet, daß das thermoplastische, Chlor enthaltende Kunstharz mindestens ein Polyvinylchlorid, Vinylchlorid-Ethylen-Copolymer oder Vinylchlorid-Vinylacetat-Copolymer ist.

6. Laminat nach Anspruch 2, dadurch gekennzeichnet, daß das thermoplastische aromatische Alkenylharz ein Homopolymer einer aromatischen Alkenylverbindung oder ein Copolymer einer aromatischen

Alkenylverbindung und mindestens eines ethylenisch-ungesättigten Carbonsäureesters, einer ethylenisch-ungesättigten Carbonsäure oder eines Alkenylcyanids ist.

7. Laminat nach Anspruch 2, dadurch gekennzeichnet, daß das thermoplastische aromatische Alkenylharz ein kautschukartiges Polymer ethält.

8. Laminat nach Anspruch 7, dadurch gekennzeichnet, daß das kautschukartige Polymer mindestens ein Kautschuk aus einem konjugiertem Dien und/oder einem Olefin ist.

9. Laminat nach einem der vorstehenden Ansprüche, dadurch gekennzeichnet, daß das Vinylidenfluoridharz (B) ein Polyvinylidenfluorid oder ein Copolymer mit 50% oder mehr Vinylidenfluorid ist.

10. Laminat nach einem der vorstehenden Ansprüche, dadurch gekennzeichnet, daß der ethylenisch-ungesättigte Carbonsäureester ein Alkylacrylat, Alkylmethylacrylat oder Hydroxylalkylester einer ethylenisch-ungesättigten Carbonsäure oder eine Kombination von mindestens zwei dieser Verbindungen ist.

11. Laminat nach Anspruch 10, dadurch gekennzeichnet, daß der ethylenisch-ungesättigte Carbonsäureester ein Alkylmethacrylat ist.

12. Laminat nach Anspruch 10, dadurch gekennzeichnet, daß der ethylenisch-ungesättigte Carbonsäureester ein Methylmethacrylat ist.

13. Laminat nach einem der vorstehenden Ansprüche, dadurch gekennzeichnet, daß die Schicht des Vinylidenfluoridharzes (B) von 2 bis 40 Gewischtsprozent polymerisierte Einheiten eines ethylenisch-ungesättigten Carbonsäureesters enthält.

14. Laminat nach einem der vorstehenden Ansprüche, dadurch gekennzeichnet, daß die Schicht des thermoplastischen Harzes (A) ein ethylenisch-ungesättigtes Carbonsäureester-Polymer (C') enthält.

15. Laminat nach Anspruch 13, dadurch gekennzeichnet, daß die Vinylidenfluoridharzschicht (B) ein ethylenischungesättigtes Carbonsäureester-Polymer (C') enthält.

16. Laminat nach Anspruch 14 oder 15, dadurch gekennzeichnet, daß das enthylenisch-ungesättigte Carbonsäureester-Polymer (C') ein Homopolymer eines ethylenisch-ungesättigten Carbonsäureesters, ein Copolymer eines enthylenischungesättigten Carbonsäureesters und mindestens eines anderen copolymerisierbaren Vinylmonomers und/oder mindestens eines kautschaukartigen Polymers oder ein Gemisch des Homopolymers und des Copolymers ist.

17. Laminat nach Anspruch 16, dadurch gekennzeichnet, daß das ethylenisch-ungesättigte Carbonsäureester-Polymer (C') Polymethylmethacrylat ist.

**Revendications**

1. Stratifié comprenant une couche (A) d'une résine thermoplastique adhérant sur une couche (B) d'une résine de fluorure de vinylidène, caractérisé en ce que la couch (A) contient de 3 à 60% en poids, par rapport au poids de la couche (A), de motifs polymérisés (C) dérivé d'un ester d'un acide carboxylique à insaturation éthylénique, et en ce que les couches (A) et (B), adhèrent directement sans interposition d'un adhésif supplémentaire.

2. Stratifié selon la revendication 1, dans lequel la résine thermoplastique (A), comprend au moins une résine choisie parmi les technopolymères, les résines thermoplastiques contenant du chlore et les résines thermoplastiques dérivées de composé aromatique à groupe alkényle.

3. Stratifié selon la revendication 2, dans lequel le technopolymère comprend au moins une résine choisie parmi les résines de polycarbonate, les résines de polyacétal, les résines de polyoxyphénylène, les résines de polyamide, les résines de polyuréthanne et les résines de polyester.

4. Stratifié selon la revendication 2, dans lequel la résine thermoplastique contenant du chlore, est un homopolymère ou un copolymère du chlorure de vinyle.

5. Stratifié selon la revendication 2, dans lequel la résine thermoplastique contenant du chlore, comprend au moins une résine choisie parmi le chlorure de polyvinyle, un copolymère de chlorure de vinyle et d'éthylène, et un copolymère de chlorure de vinyle et d'acétate de vinyle.

6. Stratifié selon la revendication 2, dans lequel la résine thermoplastique dérivée de composé aromatique à groupe alkényle, est un homopolymère d'un composé aromatique à groupe alkényle, ou un copolymère d'un composé aromatique à groupe alkényle et d'au moins un composé choisi parmi les esters d'acide carboxylique à insaturation éthylénique, les acides carboxyliques à insaturation éthylénique et les composés dérivés de cyanure d'alkényle.

7. Stratifié selon la revendication 2, dans lequel la résine thermoplastique dérivée de composé aromatique à groupe alkényle, contient un polymère caoutchouteux.

8. Stratifié selon la revendication 7, dans lequel le polymère caoutchouteux, comprend au moins un caoutchouc dérivé de diène conjugé et/ou un caoutchouc oléfinique.

9. Stratifie selon l'une quelconque des revendications précédentes, dans lequel la résine de fluorure de vinylidène (B), est du fluorure de polyvinylidène, ou un copolymère contenant 50% ou plus de fluorure de vinylidène.

10. Stratifie selon l'une quelconque des revendications précédentes, dans lequel l'ester d'acide carboxylique à insaturation éthylénique, est un acrylate d'alkyle, un méthacrylate d'alkyle ou un ester hydroxyalkylique d'un acide carboxylique à insaturation éthylénique, ou un mélange d'au moins deux de ceux-ci.

11. Stratifié selon la revendication 10, dans lequel l'ester d'acide carboxylique à insaturation éthylénique, est un méthacrylate d'alkyle.

12. Stratifié selon la revendication 11, dans lequel l'ester d'acide carboxylique à insaturation éthylénique, est le méthacrylate de méthyle.

13. Stratifie selon l'une quelconque des revendications précédentes, dans lequel la couche (B) de résine dérivée du fluorure de vinylidène, contient de 2 à 40% en poids de motifs polymérisés dérivés d'un ester d'acide carboxylique à insaturation éthylénique.

14. Stratifie selon l'une quelconque des revendications précédentes, dans lequel une polymère (C') dérivé d'un ester d'acide carboxylique à insaturation éthylénique, est contenu dans la couche de résine thermoplastique (A).

15. Stratifié selon la revendication 13, dans lequel un polymère dérivé d'ester d'acide carboxylique à insaturation éthylénique (C'), est contenu dans la couche (B) de résine dérivée du fluorure de vinylidène.

16. Stratifié selon la revendication 14 ou la revendication 15, dans lequel la polymère dérivé d'ester d'acide carboxylique à insaturation éthlénique (C'), est un homopolymère d'un ester d'acide carboxylique à insaturation éthylénique, un copolymère d'un ester d'acide carboxylique à insaturation éthylénique et d'au moins un autre monomère vinylique copolymérisable et/ou d'au moins un polymère caoutchouteux, ou un mélange de cet homopolymère et de ce copolymère.

17. Stratifié selon la revendication 16, dans lequel le polymère dérivé d'ester d'acide carboxylique à insaturation éthylénique (C'), est du polyméthacrylate de méthyle.